# FASCICULE DE BREVET EUROPEEN

(11) **EP 1 251 284 B1**
(45) Date de publication et mention de la délivrance du brevet: **14.06.2006**
(21) Numéro de dépôt: 02291006.1
(22) Date de dépôt: 19.04.2002
(51) Int. Cl.: F16B 5/00, B62D 33/04

(54) **Ensemble de deux pièces de carrosserie à réunir bord à bord et pièce de carrosserie appartenant à un tel ensemble**
Gruppe von zwei Karosserieteilen die Kante an Kante zusammenzufügen sind und Karosserieteil aus einer solchen Bauteilgruppe
Set of two car body elements to be joint side by side and car body element part of same

(30) Priorité: 19.04.2001 FR 0105329
(43) Date de publication de la demande: 23.10.2002
(73) Titulaire: COMPAGNIE PLASTIC OMNIUM, 69007 Lyon (FR)
(72) Inventeur: Delavalle, Dominique, 01100 Marchon (FR); Cordebar, Francis, 01100 Veyziat (FR)
(74) Mandataire: Remy, Vincent Noel Paul

(56) Documents cités:
- DE-A- 3 330 221
- US-A- 3 894 316
- US-A- 4 057 948
- US-A- 4 266 386

## Description

La présente invention concerne un ensemble de deux pièces de carrosserie à réunir bord à bord et une pièce de carrosserie appartenant à un tel ensemble.

On sait que les pièces de carrosserie nécessitent de plus en plus d'être parfaitement mises en référence les unes par rapport aux autres afin d'assurer l'esthétique du véhicule.

Dans cette optique, on a déjà imaginé un certain nombre de solutions consistant à fixer précisément chaque pièce de carrosserie sur la structure du véhicule, en veillant à ce que des pièces de carrosserie adjacentes bénéficient de points de fixation voisins, voire identiques, sur leurs bords contigus.

Les fixations mises en jeu dans ces solutions doivent être relativement solides car elles assurent le soutien des pièces de carrosserie en même temps que leur mise en référence.

Ces fixations sont généralement constituées par des pièces rapportées, souvent en métal, et il en résulte des problèmes de coût, tant en fourniture qu'en main d'oeuvre.

En outre, ces pièces rapportées sont mises en place individuellement, ce qui nécessite que chaque emplacement recevant une telle pièce soit accessible.

L'accessibilité aux rebords des pièces ne pose en principe pas de difficulté tant que les deux pièces ne sont pas montées sur le véhicule. En revanche, après montage, leur fixation l'une à l'autre s'avère généralement beaucoup plus difficile et implique des manoeuvres longues et délicates.

La présente invention vise à fournir un nouvel ensemble de deux pièces de carrosserie dont l'assemblage est simple et rapide, même en cas d'accessibilité réduite, et qui procure un positionnement relatif des deux pièces d'une grande précision.

La présente invention a pour objet un ensemble de deux pièces de carrosserie comportant chacune un rebord destiné à venir en contact par sa face externe avec le rebord de l'autre pièce, le rebord d'une première des pièces comportant une lumière traversant l'épaisseur du rebord jusqu'à sa face interne tandis que le rebord d'une seconde pièce comporte un tenon présentant une forme d'emboîtement et s'étendant vers la première pièce, apte à pénétrer dans ladite lumière pour faire saillie de la face interne du rebord de la première pièce, ledit tenon présentant une forme d'emboîtement, l'ensemble comportant en outre un organe de maintien qui se positionne contre la face interne du rebord de la première pièce et comporte une forme d'emboîtement complémentaire à celle du tenon pour s'emboîter avec ce dernier.

On comprend que l'invention procure un moyen simple de solidariser les bords en regard des deux pièces, d'une manière à la fois robuste, simple et rapide.

Les formes d'emboîtement de l'organe de maintien et du ou des tenons de la seconde pièce doivent assurer la rétention des tenons dans une direction de traction opposée à leur direction d'introduction dans les lumières de la première pièce. Par exemple, selon une forme préférée de réalisation, les formes d'emboîtement présentent une section en T.

Dans un mode de réalisation particulier, la première pièce comporte plusieurs lumières et la seconde pièce comporte plusieurs tenons positionnés en regard des lumières lorsque les deux pièces sont rapprochées l'une de l'autre.

Les lumières et tenons sont répartis le long des rebords à assembler, en fonction des contraintes mécaniques que l'assemblage est censé supporter.

Avantageusement, le ou les tenons et l'organe de maintien s'emboîtent selon une direction sensiblement parallèle aux rebords.

De cette manière, l'organe de maintien peut s'emboîter avec les tenons "en aveugle", c'est-à-dire sans que l'opérateur ne voie les tenons mais simplement grâce à un positionnement correct dudit organe de maintien au début de son mouvement d'emboîtement parallèlement aux rebords.

Dans une variante avantageuse, la première pièce comporte, sur la face interne de son rebord, des formes de guidage qui soutiennent l'organe de maintien sur une trajectoire adéquate le long des rebords des pièces pour son emboîtement avec les tenons. Dans ce cas, le déplacement en aveugle de l'organe de maintien est facilité, ce qui permet sa mise en place sur des rebords dont l'accessibilité est très réduite, par exemple dont seule une extrémité est accessible, le reste des rebords étant inaccessible.

C'est notamment le cas d'un raccordement aile - pare-chocs dans lequel on peut introduire l'organe de maintien par le passage de roue en lui imprimant un mouvement de bas en haut, alors que les rebords assemblés de l'aile et du pare-chocs ne sont pas accessibles sur toute leur hauteur.

Si, de plus, les tenons et l'organe de maintien sont agencés de manière que l'emboîtement dudit organe de maintien s'effectue avec tous les tenons simultanément, on comprend que la mise en place de l'organe de maintien est particulièrement facile et rapide et qu'elle assure en un seul mouvement de translation la solidarisation des deux pièces de carrosserie.

Dans une autre variante avantageuse, compatible avec la précédente, l'organe de maintien est apte à prendre, en plus de sa position d'emboîtement avec les tenons, une position de pré-emboîtement dans laquelle il se trouve contre la face interne du rebord de la première pièce mais n'est pas encore emboîté avec les tenons, son passage de cette position de pré-emboîtement à la position d'emboîtement s'effectuant par une translation légèrement supérieure à la longueur d'emboîtement des tenons.

Ainsi, l'organe de maintien peut être placé en position de pré-emboîtement sur la première pièce avant même que les deux pièces de carrosserie ne soient rapprochées l'une de l'autre.

Dans un mode de réalisation particulier de l'invention, l'une des pièces comporte des orifices de centrage positionnés de manière précise sur son rebord et l'autre pièce comporte des pions de centrage destinés à s'engager à jeu réduit dans lesdits orifices de centrage.

Selon d'autres modes particulières de l'invention :
- l'une au moins des pièces de carrosserie, de préférence la première, c'est-à-dire celle qui comporte les tenons, est réalisée en matière plastique,
- l'organe de maintien est réalisé en matière plastique,
- les plots de centrage sont prévus sur une pièce de carrosserie réalisée en matière plastique.

L'invention a également pour objet une pièce de carrosserie comportant un rebord destiné à venir en contact avec le rebord d'une autre pièce de carrosserie, comportant un tenon présentant une forme d'emboîtement en saillie de son rebord.

Afin de faciliter la compréhension de l'invention, des modes de réalisation vont maintenant en être décrits à titre d'exemples à l'aide des dessins annexés dans lesquels :
- la figure 1 représente partiellement une aile de carrosserie et un élément de pare-chocs,
- la figure 2 représente, en coupe, les rebords assemblés de l'aile et du pare-chocs,
- la figure 3 est une représentation à plus grande échelle de la partie III de la figure 2,
- la figure 4 est une représentation à plus grande échelle de la partie IV de la figure 2,
- la figure 5 est une vue en coupe selon V-V de la figure 2,
- la figure 6 est une vue en perspective de l'organe de maintien représenté seul,
- la figure 7 est une vue d'ensemble de l'aile, du pare-chocs et de l'organe de maintien selon un autre mode de réalisation,
- la figure 8 est une vue en coupe selon VIII-VIII sur la figure 7 de l'organe de maintien en cours de mise en place sur les rebords,
- la figure 9 est une section selon IX-IX de la figure 8.

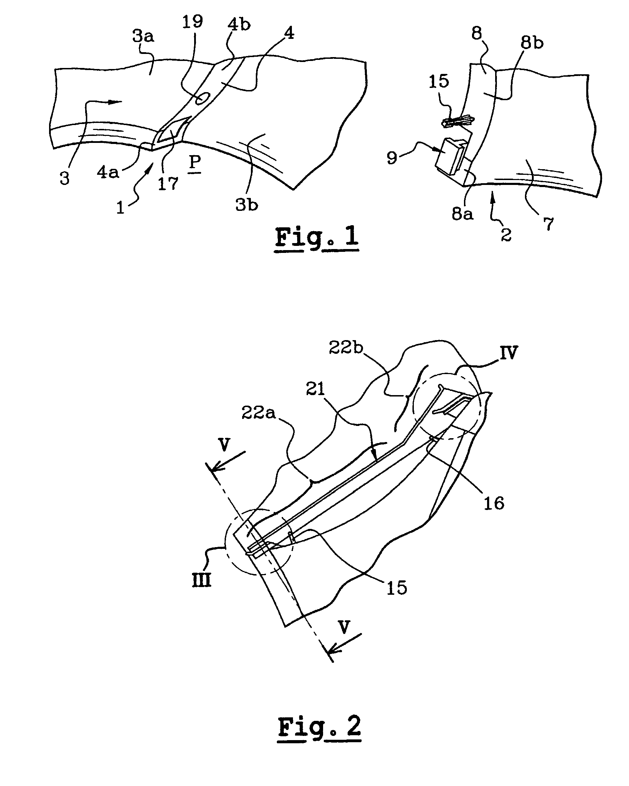

On a représenté partiellement, sur la figure 1, deux pièces de carrosserie, à savoir une aile arrière 1 et un pare-chocs arrière 2.

L'aile 1 est réalisée en tôle et le pare-chocs 2 en matière plastique.

L'aile 1 comporte une paroi 3 présentant un rebord 4 servant à l'assemblage avec le pare-chocs 2, formé par un décrochement entre une région visible 3a de la paroi 3, située à gauche du décrochement sur la figure 1 et une région 3b de la paroi 3 située à droite du décrochement sur la figure 1, destinée à être recouverte par le pare-chocs 2 lorsque ce dernier et l'aile 1 sont assemblés.

Le rebord 4 est sensiblement perpendiculaire aux régions 3a et 3b de la paroi 3.

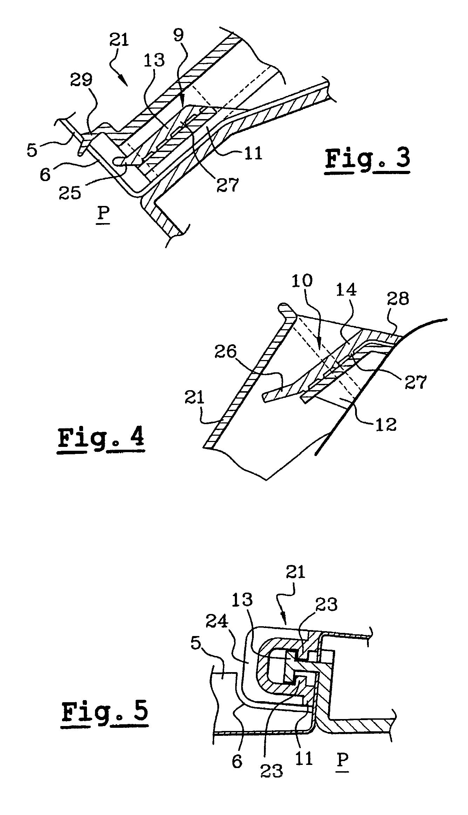

Comme on peut le voir notamment sur les figures 3 et 5, l'aile 1 comporte, du côté de l'arche de roue P, un retour 5 dirigé vers l'intérieur du véhicule.

Ce retour 5 est traversé par une ouverture 6 dont la fonction sera précisée plus loin.

Le pare-chocs 2 comporte une paroi 7 venant sensiblement dans la continuité de la région 3a de l'aile 1 lorsque le pare-chocs 2 et l'aile 1 sont assemblés, ainsi qu'un rebord 8 servant à l'assemblage avec l'aile 1, formé par un retour sensiblement perpendiculaire à la paroi 7.

Ce rebord 8 est conformé pour venir en appui sur le rebord 4 de l'aile 1.

Alors que le rebord 4 comporte une portion plane 4a et une portion incurvée 4b, le rebord 8 présente une portion plane 8a destinée à venir en appui contre la portion plane 4a et une portion incurvée 8b adaptée pour épouser la forme de la portion incurvée 4b.

Ainsi, lorsque l'aile et le pare-chocs sont assemblés, ils se raccordent de manière continue par une correspondance de forme de leurs rebords 4 et 8, indépendamment de leur mode de fixation.

Le rebord 8 supporte deux tenons 9 et 10 ayant chacun en section une forme générale en T, le tenon 9 étant le plus proche de l'arche de roue P tandis que le tenon 10 se situe à l'extrémité de la portion incurvée 8b la plus éloignée de la portion plane 8a.

Les tenons 9 et 10 comportent des jambes respectives 11 et 12, se raccordant perpendiculairement au rebord 8, et des parois transversales respectives 13 et 14, à l'extrémité des jambes 11 et 12 correspondantes et perpendiculaires à ces dernières.

Le rebord 8 supporte en outre deux pions de centrage 15, 16 chacun à proximité d'un des tenons 9 et 10.

Le rebord 4 comporte deux lumières 17 pour recevoir les deux tenons 9 et 10 et des orifices de centrage 19 pour recevoir les pions 15, 16, de dimensions adaptées à celle desdits pions, de manière qu'une fois rapprochés, l'aile 1 et le pare-chocs 2 soient empêchés de se déplacer suivant le plan de contact des portions incurvées 4b et 8b.

Pour maintenir les pions 15, 16 engagés dans les orifices 19 et les portions 4b et 8b rapprochées, un organe de maintien 21 est engagé sur les tenons 9 et 10 au travers de l'ouverture 6.

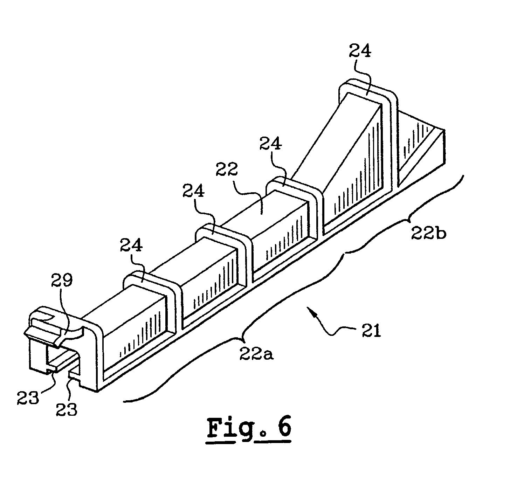

Cet organe de maintien 21, mieux visible sur la figure 6, est constitué par un corps allongé 22, rigide, de section transversale intérieure ouverte.

Comme on le voit sur les figures 2 et 6, le corps allongé 22 comporte une portion rectiligne 22a qui se prolonge par une portion évasée 22b visant à suivre l'incurvation des rebords 4 et 8.

La section transversale du corps allongé 22 forme, comme on le voit sur la figure 6, un U dont les deux branches latérales comportent, à leurs extrémités, des nervures de retenue 23 dirigées l'une vers l'autre et rétrécissant la section de passage du U.

Comme le représente la figure 5, au droit des nervures de retenue 23, la paroi transversale 13 de chaque tenon se loge à l'intérieur du U et sa jambe 11 est pincée entre les deux nervures de retenue 23, de sorte que le tenon est emprisonné dans l'organe de maintien.

Les nervures de retenue 23 ne s'étendent pas sur toute la longueur de l'organe de maintien mais se limitent aux régions correspondant aux tenons et lumières prévus sur les deux pièces de carrosserie, comme on le voit sur la figure 2.

Des nervures de renfort externes 24 sont disposées en différents endroits de la longueur du corps allongé 22 pour renforcer ce dernier contre un éventuel écartement des deux branches du U de sa section transversale.

Dans une variante (non représentée), les nervures de renforcement peuvent être omises, si l'organe de maintien mis en place contre le rebord de la première pièce de carrosserie est empêché de s'écarter par des butées solidaires de cette première pièce de carrosserie. De telles butées peuvent en outre servir de guidage pour la mise en place de l'organe de maintien, comme cela sera décrit ultérieurement.

Les parois transversales 13 et 14 des tenons comportent des bords relevés respectifs 25 et 26 à leur extrémité dirigée vers l'arche de roue P, afin de faciliter l'engagement des nervures de retenue 23 sous les parois transversales 13, 14.

Les parois transversales 13 et 14 comportent en outre des bossages 27 du même côté que les jambes 11 et 12, permettant de réduire les surfaces de contact desdites parois transversales avec les nervures de retenue, pour limiter les frottements lors de l'insertion de l'organe de maintien.

On voit, sur la figure 4, que la paroi transversale 14 du tenon 10 se raccorde au rebord 8 du côté opposé à l'arche de roue P, par un prolongement incliné 28 servant de butée à l'organe de maintien 21.

Ledit organe de maintien 21 s'immobilise en position, après avoir été introduit par une translation longitudinale à travers l'ouverture 6 du retour 5 de l'aile, grâce à une patte élastique 29 formée à l'extrémité dudit organe élastique voisine de l'arche de roue. Cette patte élastique 29 s'appuie contre la découpe de l'ouverture 6, comme on le voit à la figure 3, et se déforme pour libérer l'organe de maintien 21 en vue du désassemblage des deux pièces de carrosserie.

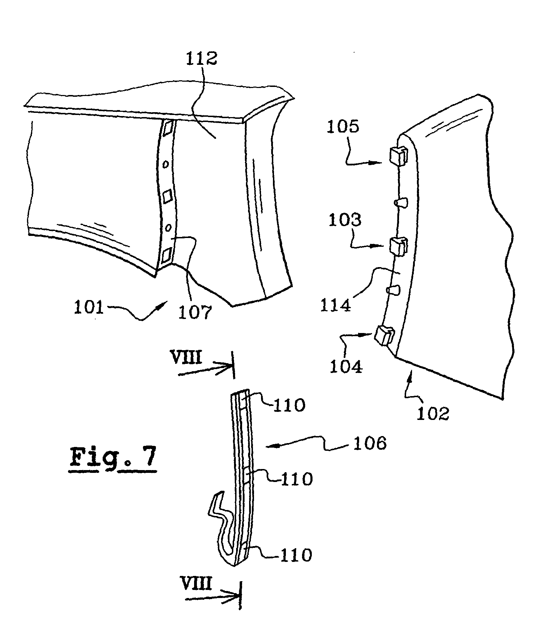

Dans le mode de réalisation des figures 7 à 9, on retrouve les même parties constitutives de l'aile 101 et du pare-chocs 102.

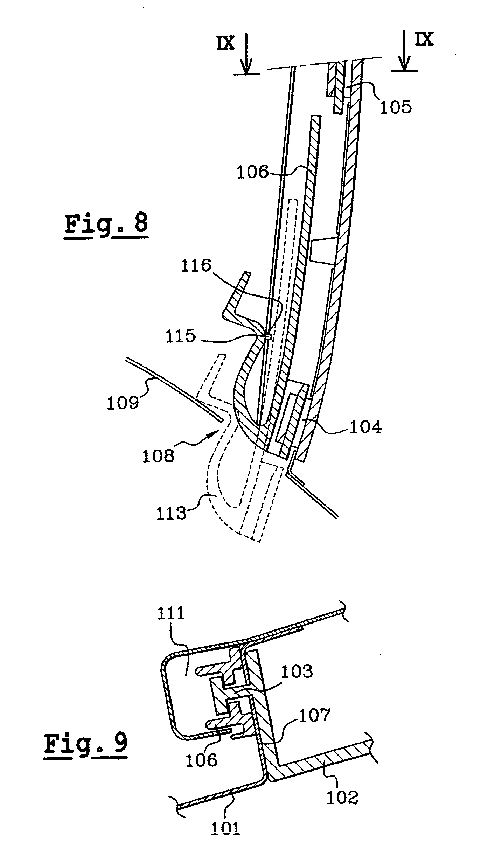

Dans cet exemple, les tenons sont au nombre de trois, un tenon central 103 étant ajouté entre les tenons d'extrémités 104 et 105. L'organe de maintien 106 est un profilé sensiblement rectiligne qui s'engage derrière le rebord 107 de l'aile par une ouverture 108 ménagée dans le retour d'aile 109 du côté de l'arche de roue, comme on le voit sur la figure 8.

Ce profilé, réalisé en matière plastique moulée, comporte trois paires de nervures de retenue 110 disposées aux emplacements correspondants aux trois tenons 103, 104 et 105 du pare-chocs.

L'aile 101 comporte, pour recevoir l'organe de maintien et le guider lors de son insertion depuis le passage de roue, un canal longitudinal 111 formé par un prolongement replié en U, derrière le rebord 107 de sa paroi 112 destinée à être recouverte par le pare-chocs.

Ce canal longitudinal 111 remplit, outre sa fonction de guidage, une fonction de soutien, en empêchant le profilé 106 de s'ouvrir sous l'effet de la traction exercée par les tenons. Ainsi, il est inutile de prévoir des nervures de renforcement à l'extérieur du profilé 106, telles que les nervures 24 du mode de réalisation précédemment décrit.

Dans ce mode de réalisation, l'organe de maintien peut être placé dans une position pré-montée, également désignée position de pré-emboîtement (représentée en traits fins sur la figure 8), dans laquelle il se trouve contre la face interne du rebord 107 mais n'est pas encore emboîté avec les tenons. L'organe de maintien passe de sa position de pré-emboîtement à sa position d'emboîtement (représentée en traits pleins sur la figure 8) par translation sur une course légèrement supérieure à la longueur d'emboîtement des tenons.

La possibilité de pré-monter l'organe de maintien 106 dans l'aile offre le double avantage de rendre l'opération d'emboîtement plus rapide et de faciliter l'insertion longitudinale de l'organe de maintien, ce dernier n'étant pas gêné par la présence des tenons au moment de son pré-emboîtement.

Pour sa rétention en position de pré-emboîtement, l'organe de maintien comporte une patte élastique 113 à son extrémité arrière (c'est-à-dire située du côté de l'arche de roue) qui se déforme pour pénétrer dans l'ouverture 108 et empêche ledit organe de maintien de ressortir sous l'action de la pesanteur une fois cette ouverture franchie.

La rétention de l'organe de maintien en position d'emboîtement est assurée par un ergot 115 qui pénètre dans un perçage 116 prévu dans la tôle délimitant le canal 111, à l'emplacement approprié.

Pour le démontage du pare-chocs, on tire sur l'organe de maintien vers le bas en le saisissant par sa patte élastique 113, pour dégager l'ergot 115 et amener ladite patte élastique contre le retour 109, l'organe de maintien se trouvant alors à nouveau en position de pré-emboîtement.

Dans une variante non représentée, un bouchon est rapporté sur l'ouverture 108 et son encliquetage peut servir à retenir l'organe de maintien en position d'emboîtement.

Dans l'exemple des figures 7 à 9, les légères incurvations des rebords 107 de l'aile et 114 du pare-chocs sont absorbées par déformation de l'organe de maintien 106, lequel peut comporter à cet effet des zones de moindre épaisseur formant charnières, voire des zones co-moulées réalisées en une matière souple remplissant la même fonction de charnières.

La portée de l'invention étant définie par les revendications annexées.

En particulier, on peut noter que la forme relativement simple de la première pièce permet de réaliser cette dernière en tôle et de l'assembler à une seconde pièce en matière plastique, en utilisant le principe d'assemblage de l'invention.

## Revendications

1. Ensemble de deux pièces de carrosserie (1, 2, 101, 102) d'un véhicule comportant chacune un rebord (4, 8) destiné à venir en contact par sa face externe avec le rebord (8, 4) de l'autre pièce, le rebord (4, 107) d'une première des pièces comportant une lumière (17) traversant l'épaisseur du rebord jusqu'à sa face interne tandis que le rebord (8, 114) d'une seconde pièce comporte un tenon (9, 10, 103, 104, 105) présentant une forme d'emboîtement et s'étendant vers la première pièce (1, 101), apte à pénétrer dans ladite lumière (17) pour faire saillie de la face interne du rebord (4, 107) de la première pièce, l'ensemble comportant en outre un organe de maintien (21, 106) qui se positionne contre la face interne du rebord (4, 107) de la première pièce et comporte une forme d'emboîtement complémentaire à celle du tenon (9, 10, 103, 104, 105), pour s'emboîter avec ce dernier, assurant la rétention du tenon dans une direction de traction opposée à sa direction d'introduction dans la lumière de la première pièce.

2. Ensemble selon la revendication 1, **caractérisé en ce que** les formes d'emboîtement présentent une section en T.

3. Ensemble selon l'une quelconque des revendications 1 et 2, **caractérisé en ce que** la première pièce (1, 101) comporte plusieurs lumières (17) et **en ce que** la seconde pièce (2, 102) comporte plusieurs tenons (9, 10, 103, 104, 105) positionnés en regard des lumières lorsque les deux pièces sont rapprochées l'une de l'autre.

4. Ensemble selon l'une quelconque des revendications 1 à 3, **caractérisé en ce que** le ou les tenons (9, 10, 103, 104, 105) et l'organe de maintien (21, 106) s'emboîtent selon une direction sensiblement parallèle aux rebords (4, 8, 107, 114).

5. Ensemble selon l'une quelconque des revendications 1 à 4, **caractérisé en ce que** la première pièce (101) comporte, sur la face interne de son rebord (107), des formes de guidage (111) qui soutiennent l'organe de maintien (106) sur une trajectoire adéquate le long des rebords (107, 114) des pièces pour son emboîtement avec les tenons (103, 104, 105).

6. Ensemble selon l'une quelconque des revendications 4 et 5, **caractérisé en ce que** les tenons (9, 10, 103, 104, 105) et l'organe de maintien (21, 106) sont agencés de manière que l'emboîtement dudit organe de maintien s'effectue avec tous les tenons simultanément.

7. Ensemble selon l'une quelconque des revendications 1 à 6, **caractérisé en ce que** l'organe de maintien (106) est apte à prendre, en plus de sa position d'emboîtement avec les tenons (103, 104, 105), une position de pré-emboîtement dans laquelle il se trouve contre la face interne du rebord (107) de la première pièce (101) mais n'est pas encore emboîté avec les tenons, son passage de cette position de pré-emboîtement à la position d'emboîtement s'effectuant par une translation légèrement supérieure à la longueur d'emboîtement des tenons (103, 104, 105).

8. Ensemble selon l'une quelconque des revendications 1 à 7, **caractérisé en ce que** l'une (1, 101) des pièces comporte des orifices de centrage (19) positionnés de manière précise sur son rebord (4, 107) et **en ce que** l'autre pièce (2, 102) comporte des pions de centrage (15, 16) destinés à s'engager à jeu réduit dans lesdits orifices de centrage (19).

9. Ensemble selon l'une quelconque des revendications 1 à 8, **caractérisé en ce que** l'une (1, 101) au moins des pièces comporte une ouverture (6, 108) à l'extrémité de son rebord (4, 107) pour permettre l'engagement de l'organe de maintien (21, 106).

10. Ensemble selon l'une quelconque des revendications 1 à 9, **caractérisé en ce que** l'une (1, 2, 101, 102) au moins des pièces de carrosserie est réalisée en matière plastique.

11. Ensemble selon l'une quelconque des revendications 1 à 10, **caractérisé en ce que** l'organe de maintien (21, 106) est réalisé en matière plastique.

12. Ensemble selon l'une quelconque des revendications 1 à 11, **caractérisé en ce que** l'une des pièces est une aile et l'autre est un élément de pare-chocs.

13. Pièce de carrosserie d'un véhicule comportant un rebord (8, 114) destiné à venir en contact avec le rebord d'une autre pièce de carrosserie comportant un tenon (9, 10, 103, 104, 105) apte à pénétrer dans une lumière traversant l'autre pièce de carrosserie, et présentant une forme d'emboîtement en saillie de son rebord (8, 114) complémentaire à celle d'un organe de maintien pour s'emboîter avec ce dernier, assurant la rétention du tenon dans une direction de traction opposée à sa direction d'introduction dans la lumière de l'autre pièce.

14. Aile de carrosserie en tant que pièce de carrosserie selon la revendication 13.

15. Elément de pare-chocs en tant que pièce de carrosserie selon la revendication 13.

## Claims

1. An assemblage of two pieces of bodywork (1, 2, 101,102) each having a flange (4, 8) for coming into contact via its outside face with the flange (8, 4) of the other piece, the flange (4, 107) of a first one of the pieces including a slot (17) passing through the thickness of the flange to its inside face, while the flange (8, 114) of a second one of the pieces carries a tenon (9, 10, 103, 104, 105) having an engagement shape and extending towards the first piece (1, 101), the tenon being suitable for penetrating into said slot (17) so as to project from the inside face of the flange (4, 107) of the first piece, the assemblage further comprising a fastener member (21, 106) which is suitable for positioning against the inside face of the flange (4, 107) of the first piece and which has an engagement shape complementary to that of the tenon (9, 10, 103, 104, 105) for engaging therewith, retaining the tenon against traction in a direction opposite to the direction in which it is inserted into the slot of the first piece.

2. An assemblage according to claim 1, in which the engagement shapes present a T-shaped section.

3. An assemblage according to claim 1, in which the first piece (1, 101) has a plurality of slots (17) and in which the second piece (2, 102) has a plurality of tenons (9, 10, 103, 104, 105) positioned to be in register with the slots when the two pieces are brought together.

4. An assemblage according to claim 1, in which the tenon(s) (9, 10, 103, 104, 105) and the fastener member (21, 106) engage in a direction that is substantially parallel to the flanges (4, 8, 107, 114).

5. An assemblage according to claim 1, in which the first piece (101) has guide shapes (111) on the inside face of its flange (107), which guide shapes support the fastener member (106) over an appropriate stroke along the flanges (107, 114) of the pieces to enable it to engage the tenons (103, 104, 105).

6. An assemblage according to claim 4, in which the tenons (9, 10, 103, 104, 105) and the fastener member (21, 106) are arranged in such a manner that said fastener member is engaged with all of the tenons simultaneously.

7. An assemblage according to claim 1, in which the fastener member (106) is suitable for taking up not only an engaged position with the tenons (103, 104,105), but also a pre-engagement position in which it is located against the inside face of the flange (107) of the first piece (101) but is not yet engaged with the tenons, transfer from said pre-engagement position to the engagement position being performed by moving the member in translation along a stroke slightly longer than the engagement length of the tenons (103, 104, 105).

8. An assemblage according to claim 1, in which one of the pieces (1, 101) has centering orifices (19) positioned in precise manner in its flange (4, 107), and the other piece (2, 102) has centering pegs (15, 16) for engaging with little clearance in said centering orifices (19).

9. An assemblage according to claim 1, in which at least one of said pieces (1, 101) has an opening (6,108) at the end of its flange (4, 107) for engaging the fastener member (21, 106).

10. An assemblage according to claim 1, in which at least one of the pieces of bodywork (1, 2, 101, 102) is made of plastics material.

11. An assemblage according to claim 1, in which the fastener member (21, 106) is made of plastics material.

12. An assemblage according to claim 1, in which one of the pieces is a fender and the other is a bumper element.

13. A piece of bodywork of a vehicle having a flange (8, 114) designed to come into contact with the flange of another piece of bodywork, said piece of bodywork carrying a tenon (9,10, 103, 104, 105) suitable for penetrating into a slot passing through the other piece of bodywork, and presenting an engagement shape projecting from its flange (8, 114), complementary to that of a fastener member for engaging therewith, retaining the tenon against traction in a direction opposite to the direction in which it is inserted into the slot of the other piece.

14. A bodywork fender constituting the piece of bodywork according to claim 13.

15. A bumper element constituting the piece of bodywork of claim 13.

## Patentansprüche

1. Anordnung von zwei Karosserieteilen (1, 2, 101, 102) eines Fahrzeugs, die jeweils einen Anlageabschnitt (4, 8) umfassen, der dazu dient, dass seine Außenseite den Anlageabschnitt (4, 8) des anderen Teils berührt, wobei der Anlageabschnitt (4, 107) eines ersten der Teile eine Aussparung (17) umfasst, die die Dicke des Anlageabschnitts bis zu seiner Innenseite durchdringt, während der Anlageabschnitt (8, 114) eines zweiten Teils ein Hakenelement (9, 10, 103, 104, 105) umfasst, das eine Form zum Einrasten aufweist und sich in Richtung des ersten Teils (1, 101) erstreckt und so gestaltet ist, dass es in die Aussparung (17) eindringen kann und an der Innenseite des Anlageabschnitts (4, 107) des ersten Teils hervorsteht, wobei die Anordnung des Weiteren ein Halteelement (21, 106) umfasst, das an der Innenseite des Anlageabschnitts (4, 107) des ersten Teils anliegt und eine zu dem Hakenelement (9, 10, 103, 104, 105) komplementäre Einrastform umfasst, um mit letzterem zusammenzurasten, und damit dafür sorgt, dass das Hakenelement in einer Zugrichtung gehalten wird, die der Richtung des Einführens in die Aussparung des ersten Teils entgegengesetzt ist.

2. Anordnung nach Anspruch 1, **dadurch gekennzeichnet, dass** die Einrastformen einen T-förmigen Querschnitt aufweisen.

3. Anordnung nach einem beliebigen der Ansprüche 1 und 2, **dadurch gekennzeichnet, dass** das erste Teil (1, 101) mehrere Aussparungen (17) umfasst und dass das zweite Teil (2, 102) mehrere Hakenelemente (9, 10, 103, 104, 105) umfasst, die mit Bezug auf die Aussparungen angeordnet werden, wenn die beiden Teile einander angenähert werden.

4. Anordnung nach einem beliebigen der Ansprüche 1 bis 3, **dadurch gekennzeichnet, dass** das oder die Hakenelemente (9, 10, 103, 104, 105) und das Halteelement (21, 106) in einer Richtung einrastet, die im Wesentlichen parallel zu den Anlageabschnitten (4, 8, 107, 114) verläuft.

5. Anordnung nach einem beliebigen der Ansprüche 1 bis 4, **dadurch gekennzeichnet, dass** das erste Teil (101) auf der Innenseite des Anlageabschnitts (107) Führungsformen (111) umfasst, die das Halteelement (106) zum Zweck des Einrastens mit den Hakenelementen (103, 104, 105) auf einer geeigneten Bahn längs der Anlageabschnitte (107, 114) halten.

6. Anordnung nach einem beliebigen der Ansprüche 4 und 5, **dadurch gekennzeichnet, dass** die Hakenelemente (9, 10, 103, 104, 105) und das Halteelement (21, 106) so angeordnet sind, dass das Einrasten des Halteelements mit allen Hakenelementen gleichzeitig erfolgt.

7. Anordnung nach einem beliebigen der Ansprüche 1 bis 6, **dadurch gekennzeichnet, dass** das Halteelement (106) so gestaltet ist, dass es zusätzlich zur Rastposition mit den Hakenelementen (103, 104, 105) eine Vor-Raststellung einnehmen kann, in der es sich der Innenseite des Anlageabschnitts (107) des ersten Teils (101) gegenüber befindet, jedoch mit den Hakenelementen noch nicht verrastet ist, wobei sich der Übergang dieses Vor-Einrastens zum Einrasten durch einen Bewegungsablauf vollzieht, der geringfügig länger als die Einrastlänge der Hakenelemente (103, 104, 105) ist.

8. Anordnung nach einem beliebigen der Ansprüche 1 bis 7, **dadurch gekennzeichnet, dass** eines (1, 101) der Teile Zentrierbohrungen (19) umfasst, die mit hoher Maßhaltigkeit in ihrer Auflage (4, 107) positioniert sind, und **dadurch**, dass das andere Teil (2, 102) Zentrierstifte (15, 16) umfasst, die mit geringem Spiel in die Zentrierbohrungen (19) eingreifen.

9. Anordnung nach einem beliebigen der Ansprüche 1 bis 8, **dadurch gekennzeichnet, dass** mindestens eines der Teile (1, 101) am äußersten Ende seines Anlageabschnitts (4, 107) eine Öffnung (6, 108) umfasst, die eine Aufnahme des Halteelementes (21, 106) erlaubt.

10. Anordnung nach einem der Ansprüche 1 bis 9, **dadurch gekennzeichnet, dass** mindestens eines (1, 2,101, 102) der Karosserieteile aus Kunststoff gefertigt wird.

11. Anordnung nach einem beliebigen der Ansprüche 1 bis 10, **dadurch gekennzeichnet, dass** das Halteelement (21, 106) aus Kunststoff gefertigt wird.

12. Anordnung nach einem beliebigen der Ansprüche 1 bis 11, **dadurch gekennzeichnet, dass** eines der Teile ein Kotflügel und das andere ein Stoßfängerelement ist.

13. Karosserieteil für ein Fahrzeug, das einen Anlageabschnitt (8, 114) umfasst, der dazu dient, den Anlageabschnitt eines anderen Karosserieteils zu berühren, das ein Hakenelement (9, 10 , 103, 104, 105) umfasst, das so gestaltet ist, dass es in eine Aussparung eindringen kann, die das andere Karosserieteil durchdringt und eine aus ihrem Anlageabschnitt (8, 114) hervorstehende Einrastform aufweist, die komplementär zu der eines Halteelements ist, um in letzteres einzurasten, und damit dafür sorgt, dass das Halteelement in einer Zugrichtung gehalten wird, die der Richtung des Einführens in die Aussparung des ersten Teils entgegengesetzt ist.

14. Karosserie-Kotflügel als Karosserieteil nach Anspruch 13.

15. Stoßfängerelement als Karosserieteil nach Anspruch 13.
